# FASCICULE DE BREVET EUROPEEN

(11) **EP 3 555 821 B1**
(45) Date de publication et mention de la délivrance du brevet: **04.11.2020**
(21) Numéro de dépôt: 17816932.2
(22) Date de dépôt: 29.11.2017
(51) Int. Cl.: G06Q 10/04, A41H 3/00

(54) **PROCÉDÉ DE PARTITIONNEMENT D'UN PLACEMENT PRÉDÉTERMINÉ DE PIÈCES DESTINÉES À ÊTRE DÉCOUPÉES DANS UN MATÉRIAU SOUPLE EN FEUILLE**
VERFAHREN ZUR AUFTEILUNG EINER VORBESTIMMTEN PLATZIERUNG VON TEILEN, DIE ZUM SCHNEIDEN IN EIN FLEXIBLES BLECHMATERIAL BESTIMMT SIND
METHOD FOR PARTITIONING A PREDETERMINED PLACEMENT OF PARTS INTENDED TO BE CUT IN A FLEXIBLE SHEET MATERIAL

(30) Priorité: 16.12.2016 FR 1662692
(43) Date de publication de la demande: 23.10.2019
(73) Titulaire: Lectra, 75016 Paris (FR)
(72) Inventeur: VALEZE, Bruno, 33650 Martillac (FR); BOURGET, Yohan Michael Christophe, 33600 Pessac (FR)
(74) Mandataire: Cabinet Beau de Loménie
(86) Numéro de dépôt international: PCT/FR2017/053282
(87) Numéro de publication internationale: WO 2018/109301

(56) Documents cités:
- EP-A2- 0 239 665
- WO-A1-2007/085584
- FR-A1- 2 783 191
- US-A- 3 761 675
- US-A- 5 748 762

## Description

### Arrière-plan de l'invention

La présente invention concerne un procédé de partitionnement d'un placement prédéterminé de pièces destinées à être découpées dans un matériau souple en feuille.

Le domaine d'application de l'invention est notamment celui des machines de coupe qui comportent une table de travail sur laquelle les découpes des pièces sont effectuées par déplacement d'un ou plusieurs outils de coupe par rapport au matériau suivant deux directions, des portions successives du matériau étant amenées dans la zone de travail des outils de coupe.

Il en est ainsi notamment avec des machines de coupe à commande numérique utilisées pour la découpe de tissus, feutres, cuirs ou autres matériaux souples en feuille dans l'industrie de la confection, de l'ameublement, de l'automobile, etc.

Avec de telles machines de coupe, les pièces sont découpées suivant un placement prédéterminé qui est défini de manière à minimiser les pertes de matière. Afin de limiter l'encombrement de ces machines de coupe, la fenêtre de coupe (ou zone de travail) dans laquelle chaque outil de coupe travaille est généralement de dimensions inférieures à celles d'un placement complet. Pour découper l'ensemble des pièces d'un placement, il est donc nécessaire de commander des avances intermittentes du matériau afin d'amener de nouvelles portions de celui-ci dans les fenêtres de coupe, l'avance du matériau étant commandée séparément du déplacement des outils de coupe.

Dans le domaine de la production de coussins gonflables de sécurité (airbags), les industriels sont fréquemment amenés à devoir découper des placements composés uniquement de petites pièces, ces placements étant optimisés pour minimiser les pertes tout en ayant une vitesse de coupe la plus élevée possible. En effet, ces placements sont découpés de façon très régulière et toute variation dans l'optimisation du placement implique des effets non négligeables sur la consommation de matière et donc sur le coût global de production de ces pièces.

A cet effet, les placements de ce type sont généralement découpés par des machines de coupe comportant au moins deux outils de coupe. Ces outils de coupe travaillent en parallèle dans des fenêtres de coupe couvrant toute la largeur du placement mais seulement sur une portion de sa longueur, ce qui nécessite de commander des avances du matériau au fur et à mesure de la découpe des pièces.

En pratique, des problèmes récurrents apparaissent lors de la découpe des placements, en particulier dans les zones frontières entre les ensembles de pièces du placement coupées successivement par le même outil de coupe. En effet, il est possible que lorsque l'outil de coupe s'attaque à la découpe d'une pièce, les pièces des ensembles de pièces voisins aient déjà été découpées. Or, dans cette situation, l'effet d'aspiration de la matière, qui permet en temps normal de maintenir celle-ci sur la table de travail pendant la découpe, est fortement diminué autour de la pièce à découper du fait de la grande proximité de la pièce à découper avec les pièces déjà découpées. Par conséquent, la pièce à découper n'est plus aussi bien maintenue sur la table de travail, de sorte que l'outil de coupe a tendance à emporter la matière lors de son déplacement. Le plus souvent, il en résulte des défauts de coupe sur ces pièces.

Pour remédier à ce problème, la solution qui consisterait à ajouter au placement optimisé des pièces des espacements entre chaque pièce (c'est-à-dire une marge autour de chaque pièce) n'est pas pleinement satisfaisante. En utilisant cette fonctionnalité, la découpe successive des pièces donne lieu à un squelette de matière bien plus important qu'en l'absence d'espacement, ce qui augmente l'effet d'aspiration de la matière, même dans les zones où la plupart des pièces sont déjà coupées. Les défauts de coupe peuvent ainsi être évités. En revanche, l'ajout de ces espacements induit une perte de matière qui peut être significative pour ce type de placement où le nombre de pièces est élevé (plus le nombre de pièces est élevé, plus l'espace perdu par l'ajout de marges est en proportion important). Or, comme indiqué précédemment, l'optimisation des pertes tout en conservant une vitesse de coupe élevée est un enjeu crucial pour les industriels qui recourent à ce type de placements.

On connaît du document US 3,761,675 un procédé selon le préambule de la revendication 1.

### Objet et résumé de l'invention

La présente invention a donc pour but principal de pallier de tels inconvénients en proposant de partitionner un placement prédéterminé de pièces afin d'éviter les défauts de coupe dans les zones sensibles sans pour autant réduire l'efficience du placement.

Conformément à l'invention, ce but est atteint grâce à un procédé de partitionnement selon la revendication 1.

Le procédé selon l'invention est remarquable en ce qu'à partir d'un placement de pièces optimisé, il prévoit d'affecter chaque pièce du placement à un groupe de pièces qui est associé, pour la découpe des pièces, à un même outil de coupe et à une même fenêtre de coupe. A partir de ces groupes de pièces, le procédé selon l'invention prévoit d'ajouter des espacements entre les différents groupes ainsi constitués. Ainsi, le procédé selon l'invention ajoute des espacements uniquement entre des groupes de pièces à des endroits où des risques de créer des défauts de coupe des pièces sont identifiés. De la sorte, le procédé selon l'invention permet d'éviter les défauts de coupe tout en limitant la perte d'efficience du placement prédéterminé.

L'étape de création automatique de groupes de pièces peut comprendre, pour chaque pièce du placement, l'affectation de la pièce à l'un des outils de coupe en fonction d'une position transversale de ladite pièce prise le long d'une direction transversale du matériau par rapport à sa direction d'avance ; et

si l'outil de coupe auquel est affectée la pièce a été préalablement associé à un groupe de pièces prédéfini, la comparaison d'une longueur prise dans le sens de la direction d'avance du matériau d'un rectangle englobant l'ensemble des pièces du groupe et auquel est rajouté ladite pièce avec une longueur d'une fenêtre de coupe ;
si la longueur du rectangle est inférieure à la longueur de la fenêtre de coupe, l'affectation de la pièce au groupe de pièces prédéfini ;
si la longueur du rectangle est supérieure ou égale à la longueur de la fenêtre de coupe ou si l'outil de coupe auquel est affectée la pièce n'a été préalablement associé à aucun groupe de pièces prédéfini, la création d'un nouveau groupe de pièces associé à l'outil de coupe et à une nouvelle fenêtre de coupe et l'affectation de la pièce au nouveau groupe de pièces.

Dans ce cas, l'affectation des pièces à l'un des outils de coupe peut comprendre le partitionnement du placement des pièces dans le sens d'une largeur du partitionnement en fonction du nombre d'outils de coupe distincts utilisés pour découper les pièces, le partitionnement du placement résultant en des zones de placement adjacentes ayant une même largeur et associées chacune à un unique outil de coupe, et l'affectation de chaque pièce du placement à l'une des zones de placement en fonction de la position transversale de la pièce.

De plus, préalablement à l'affectation de chaque pièce du placement à l'une des zones de placement, les pièces sont de préférence triées par ordre croissant en fonction d'une position longitudinale desdites pièces prise le long de la direction d'avance du matériau.

De même, la position transversale d'une pièce peut correspondre à une position du centre géométrique du rectangle de plus petites dimensions englobant la pièce.

De préférence, l'étape d'application d'espacements entre les différents groupes de pièces comprend l'application à chaque pièce d'un même groupe de pièces d'un même décalage longitudinal selon la direction d'avance du matériau et d'un même décalage transversal selon la direction transversale à la direction d'avance du matériau.

Dans ce cas, le décalage longitudinal appliqué à chaque pièce d'un même groupe peut dépendre de la fenêtre de coupe et de l'outil de coupe auxquels est associé le groupe de pièces.

De préférence également, le procédé comprend en outre, après l'étape l'application d'espacements entre les différents groupes de pièces, l'identification automatique d'éventuelles zones de chevauchement entre des pièces de différentes groupes de pièces et la correction de ces zones de chevauchement.

Le placement prédéterminé des pièces dans le matériau correspond avantageusement à un placement optimisé calculé automatiquement pour minimiser les pertes de matière.

L'invention concerne également l'utilisation du procédé tel que défini précédemment pour le partitionnement d'un placement prédéterminé de pièces de renforts pour coussins gonflables de sécurité destinées à être découpées dans un matériau.

L'invention concerne encore un programme d'ordinateur comportant des instructions pour l'exécution des étapes du procédé de partitionnement d'un placement prédéterminé de pièces tel que défini précédemment.

L'invention vise aussi un support d'informations lisible par un ordinateur et comportant des instructions d'un programme d'ordinateur tel que mentionné ci-dessus. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique montrant un exemple de placement optimisé de pièces à partir duquel s'applique le procédé de partitionnement selon l'invention ;
- la figure 2 est un ordinogramme illustrant les principales étapes du procédé de partitionnement selon l'invention ;
- la figure 3 est une vue montrant la mise en œuvre de l'une des étapes du procédé de partitionnement selon l'invention ;
- la figure 4 est une vue schématique montrant l'application du procédé de partitionnement selon l'invention au placement optimisé de la figure 1 ;
- la figure 5 est une loupe de la figure 4 ; et
- les figures 6A et 6B montrent un autre exemple d'application du procédé de partitionnement selon l'invention avant et après intervention d'un opérateur pour supprimer tout chevauchement entre les pièces du placement.

### Description détaillée de l'invention

L'invention s'applique au placement de pièces destinées à être découpées dans un matériau souple en feuille par des machines de coupe à commande numérique qui comportent une table de travail sur laquelle les découpes des pièces sont effectuées.

De façon connue en soi, la table de travail de ces machines de coupe est constituée par la surface supérieure d'un convoyeur sans fin logé dans un caisson à l'intérieur duquel peut être établie une dépression selon une technique bien connue de l'homme de l'art. Un matériau souple en feuille est amené sur le convoyeur sans fin qui supporte et entraîne le matériau de façon continue le long de la table de travail. L'avance du matériau sur la table de travail suivant une direction longitudinale X est effectuée par commande du moteur d'entraînement du convoyeur.

L'installation comporte également un système de coupe qui se compose d'un ou plusieurs outils de coupe qui peuvent se déplacer horizontalement suivant la direction longitudinale X du convoyeur et suivant une direction transversale Y perpendiculaire à la direction X. Ces outils de coupe se déplacent chacun au-dessus d'une zone de travail, appelée ci-après « fenêtre de coupe », des portions successives du matériau étant amenées par entraînement du convoyeur dans ces fenêtres de coupe.

Le système de coupe de ces machines est à commande numérique, c'est-à-dire qu'il est commandé à partir d'une station de travail informatique. Les commandes de déplacements des outils de coupe pour découper les pièces proviennent d'un placement prédéterminé des pièces qui est enregistré dans une mémoire de la station de travail.

Typiquement, le placement prédéterminé des pièces est un fichier numérique qui contient des instructions de commandes des outils de coupe. Ce placement prédéterminé est élaboré par un opérateur (ou de façon automatique par un logiciel) à partir du profil géométrique des pièces notamment de façon à minimiser les pertes de matière et à optimiser la vitesse de coupe.

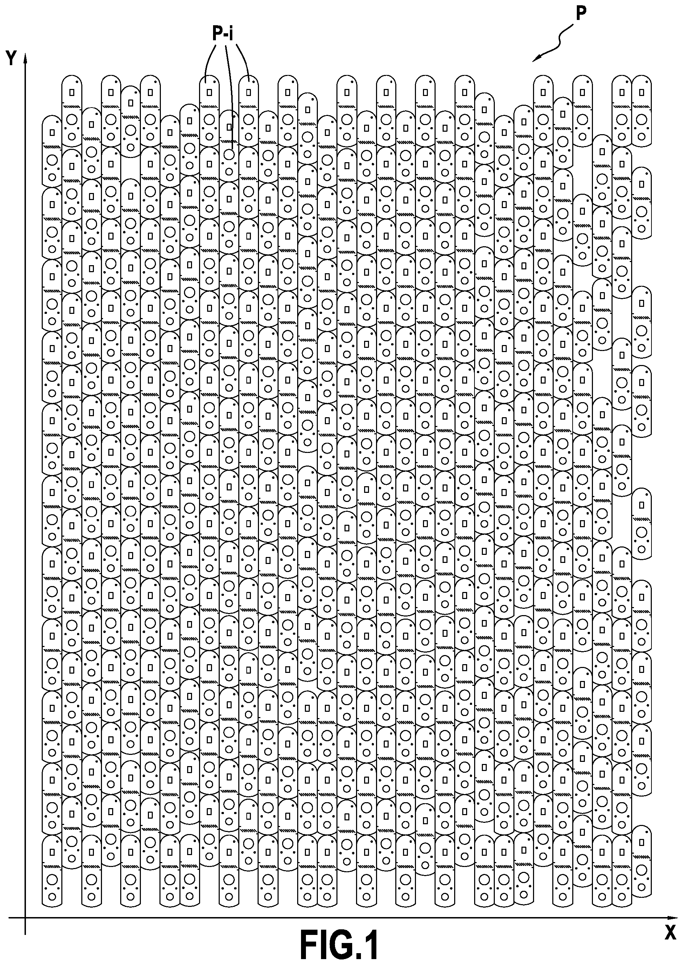

La figure 1 représente ainsi un exemple d'un tel placement optimisé pour la découpe d'une pluralité de pièces (n pièces) identiques et de petites dimensions, ici des pièces de renforts pour coussins gonflables de sécurité (airbags).

On remarque sur cette figure 1 que le placement P des n pièces [p-1, p-2, ..., p-i... p-n] est compact (les pièces sont très proches les unes des autres) et organisé de façon à optimiser l'efficience (toutes les pièces sont disposées en lignes parallèles selon l'axe Y et orientées de la même façon).

A partir d'un tel placement prédéterminé P, l'invention prévoit un procédé pour obtenir un placement partitionné P' dans lequel les pièces à découper sont automatiquement regroupées, en fonction de leur emplacement géométrique dans le placement, dans m groupes de pièces différents [G-1, G-2, ... G-h, ... G-m] associés chacun à un même outil de coupe [O-1, O-2, ...O-j, ... O-k] et à une même fenêtre de coupe [F-1, F-2, ...F-i, ... F-l]. Les groupes de pièces ainsi créés sont ensuite espacés les uns des autres.

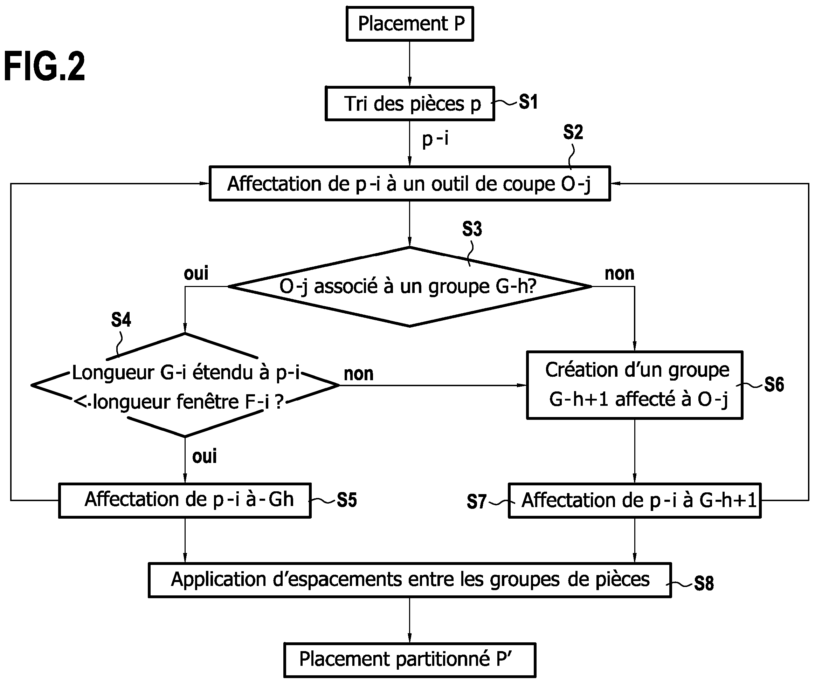

La figure 2 représente les différentes étapes du procédé de partitionnement selon un mode de réalisation de l'invention. Dans ce mode de réalisation, le procédé de partitionnement se présente sous la forme d'un algorithme mis en œuvre au sein d'un logiciel équipant la station de travail à partir des données d'entrées suivantes saisies par l'opérateur : fichier numérique contenant le placement P, nombre d'outils de coupe de la machine de coupe avec laquelle le placement sera découpé, et longueur d'une fenêtre de coupe (toutes les fenêtres de coupe F-1 à F-l ayant la même longueur).

Selon une première étape S1 du procédé, toutes les pièces p-1 à p-n du placement prédéterminé P sont triées par ordre croissant en fonction d'une position longitudinale desdites pièces dans le placement prise le long de la direction longitudinale X d'avance du matériau sur la table de coupe.

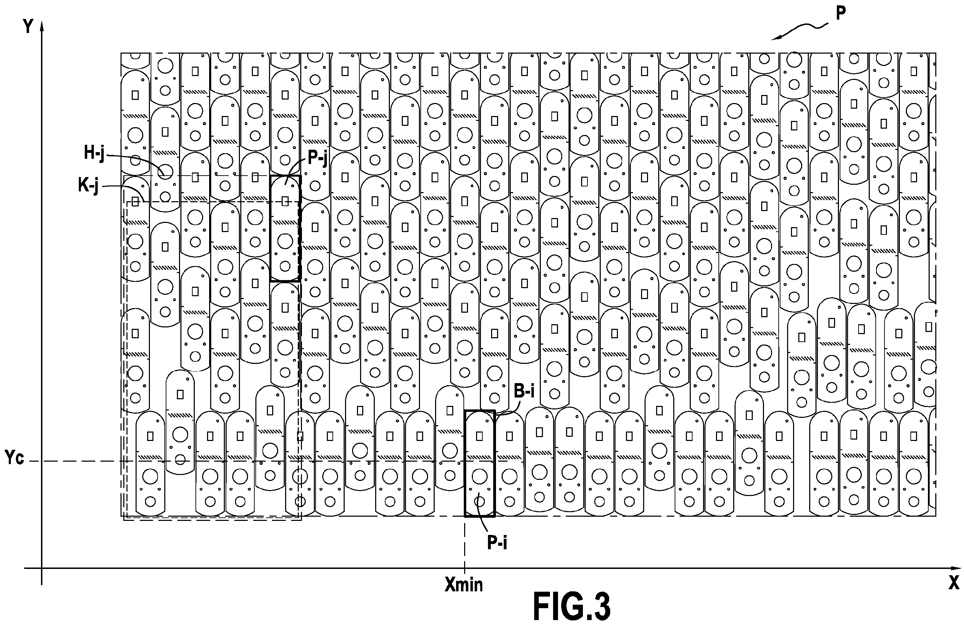

Plus précisément, pour chaque pièce p-i du placement, on calcule une boîte englobante B-i qui est le plus petit rectangle pouvant contenir ladite pièce (voir la figure 3). L'ensemble des pièces du placement sont alors classées par ordre croissant de l'abscisse minimale Xmin de la boîte englobante B-i qui leur est associée.

Les pièces du placement sont alors prises les unes après les autres en fonction de leur tri pour les affecter à un groupe de pièces selon les étapes S2 à S7 qui se réitèrent pour toutes les pièces.

Dans une étape S2, chaque pièce p-i est affectée à un outil de coupe O-i en fonction de sa position transversale, c'est-à-dire de sa position prise le long de la direction transversale Y.

Plus précisément, pour la détermination de la position transversale de la pièce p-i, on prendra l'ordonnée Yc du centre géométrique de la boite englobante B-i associée à la pièce.

En pratique, si la machine de coupe ne comporte qu'un seul outil de coupe, toutes les pièces du placement seront bien entendu affectées à cet unique outil de coupe.

Si la machine comporte plus d'un outil de coupe O-j, on divisera la largeur de la table de coupe en autant de zones de placement qu'il y a d'outils de coupe, ces zones de placement étant de même largeur et associées chacune à l'un des outils de coupe. Ainsi, en fonction de l'ordonnée Yc du centre géométrique de la boite englobante B-i associée à chaque pièce, on pourra en déduire à quel outil de coupe O-j la pièce est affectée.

L'étape S3 suivante consiste à déterminer si l'outil de coupe O-j auquel a été affecté la pièce p-i a été préalablement déjà associé à un groupe de pièces G-h.

Si cela est le cas, le procédé prévoit, au cours d'une étape S4, de calculer la longueur L prise dans le sens de la direction d'avance X du matériau d'un rectangle H englobant l'ensemble des pièces du groupe en question et auquel est rajouté ladite pièce.

La figure 3 représente un exemple de calcul d'une telle longueur L pour la pièce p-j. Sur cette figure est notamment représenté le rectangle K-j englobant l'ensemble des pièces du groupe de pièces G-j associé à l'outil de coupe. Le rectangle identifié par la référence H-j correspond au rectangle K-j étendu à la pièce p-j. Dans cet exemple, la longueur L du rectangle K-j est identique à celle du rectangle H-j englobant seulement les pièces du groupe de pièces G-j.

La longueur L ainsi calculée est comparée avec la longueur L' d'une fenêtre de coupe F-i préalablement associée au groupe de pièces G-h, cette longueur L'étant l'une des données saisies par l'opérateur.

Si la longueur L du rectangle englobant l'ensemble des pièces du groupe en question et auquel est rajouté la pièce est inférieure à la longueur L' de la fenêtre de coupe F-i, alors la pièce en question est affectée au groupe de pièces G-h associé à l'outil de coupe O-j (étape S5).

A l'inverse, si la longueur L du rectangle englobant l'ensemble des pièces du groupe en question et auquel est rajouté la pièce est supérieure ou égale à la longueur L' de la fenêtre de coupe F-i, alors la pièce en question n'est pas affectée au groupe de pièces G-h associé à l'outil de coupe O-j.

Dans ce cas, un nouveau groupe de pièces G-h+1, distinct du groupe G-h, est créé, ce nouveau groupe de pièces étant associé à l'outil de coupe O-j et à une nouvelle fenêtre de coupe F-i+1 (étape S6). En pratique, la nouvelle fenêtre de coupe F-i+1 est une fenêtre de coupe qui est décalée longitudinalement vers les abscisses croissantes par rapport à la fenêtre de coupe F-i préalablement définie.

La pièce p-i pour laquelle la longueur L se trouve supérieure ou égale à la longueur L'est alors affectée à ce nouveau groupe de pièces G-h+1 (étape S7).

Les étapes S2 à S7 sont réitérées pour l'ensemble des n pièces p-1 à p-n du placement P.

Une fois que toutes les pièces ont été affectées à l'un des m groupes de pièces G-1 à G-m, le procédé selon l'invention prévoit d'appliquer des espacements entre les différents groupes de pièces G-1 à G-m (étape S8).

Plus précisément, cette étape d'application d'espacements entre les différents groupes de pièces comprend l'application à chaque pièce p-i d'un même groupe de pièces G-h d'un même décalage longitudinal DX (c'est à dire selon la direction d'avance X du matériau) et d'un même décalage transversal DY (c'est-à-dire selon la direction transversale Y).

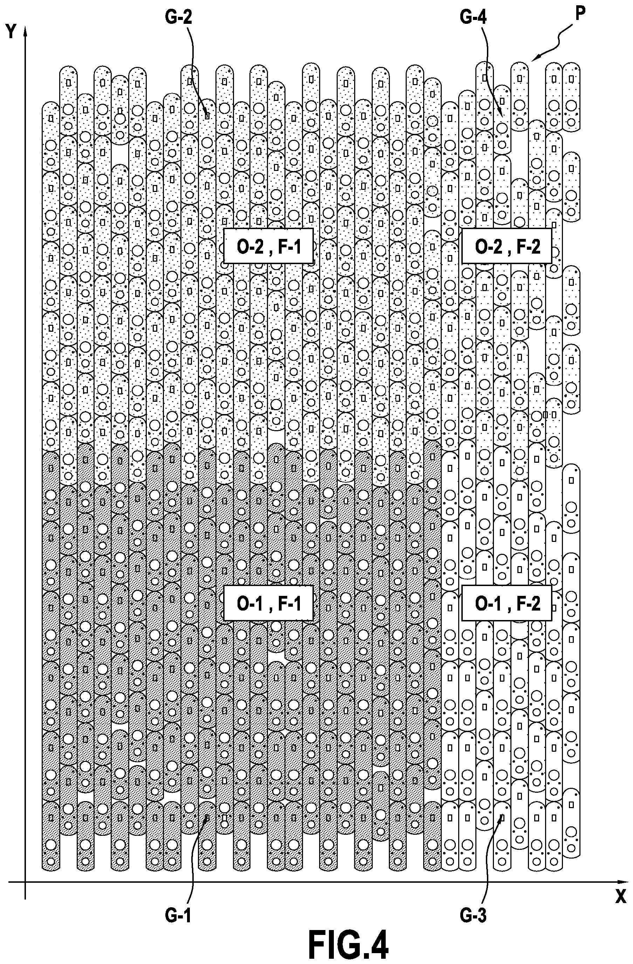

La figure 4 illustre un exemple d'application de tels espacements. Sur cette figure sont représentés 4 groupes de pièces G-1, G-2, G-3 et G-4, les groupes de pièces G-1 et G-3 étant associés au même outil de coupe O-1 et à deux fenêtres de coupe F-1, F-2 différentes, tandis que les groupes de pièces G-2 et G-4 sont associés à un autre outil de coupe O-2 et aux deux mêmes fenêtres de coupe F-1, F-2. Ces groupes de pièces G-1 à G-4 ont été constitués à l'issue de la mise en œuvre des étapes S2 à S7 décrites précédemment.

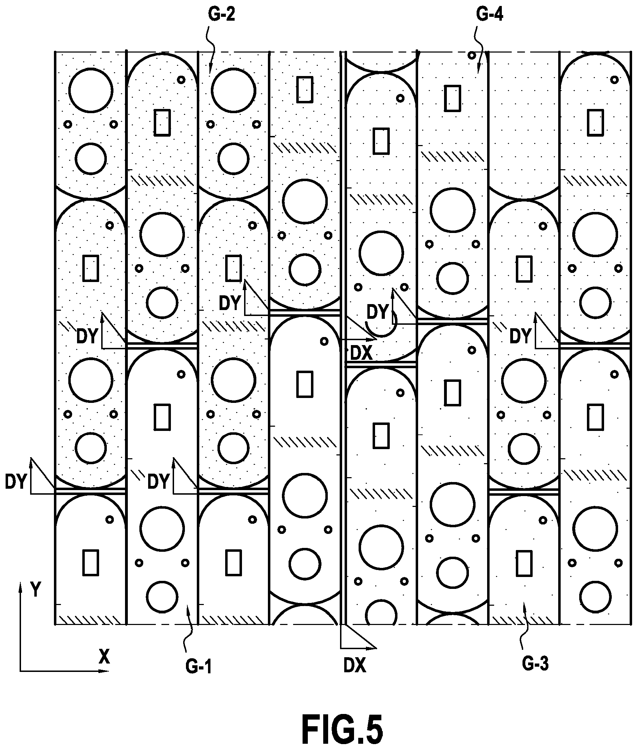

Comme représenté plus précisément sur la figure 5, les espacements DX et DY ont ensuite été appliqués entre ces 4 groupes de pièces G-1 à G-4.

En pratique, les décalages longitudinaux DX et transversaux DY appliqués à chaque pièce d'un même groupe de pièces dépendent de la fenêtre de coupe et de l'outil de coupe auxquels est associé le groupe de pièces : les pièces du groupe de pièces G-1 n'ont subi aucun décalage longitudinal et transversal ; les pièces du groupe de pièces G-2 ont subi uniquement un même décalage transversal DY ; les pièces du groupe de pièces G-3 ont subi uniquement un même décalage longitudinal DX ; et les pièces du groupe de pièces G-4 ont subi à la fois un même décalage longitudinal DX et un même décalage transversal DY.

Une fois que les déplacements ont été appliqués entre les différents groupes de pièces G-1 à G-m, le fichier numérique contenant notamment les nouvelles coordonnées géométriques des pièces est enregistré pour pouvoir être utilisé par la machine de coupe.

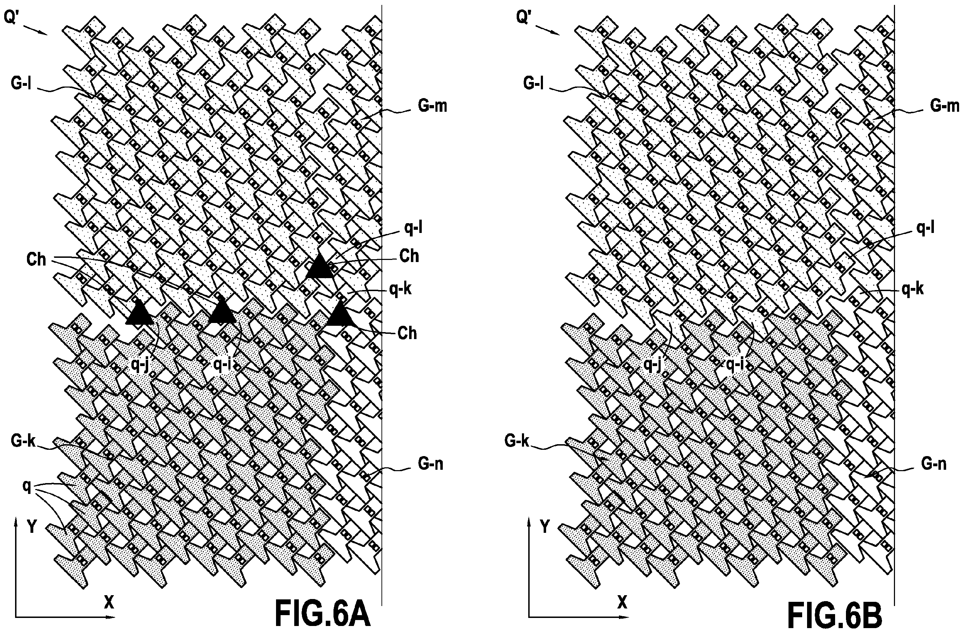

Les figures 6A et 6B illustrent un autre exemple de mise en œuvre du procédé de partitionnement selon l'invention.

Dans cet exemple, les pièces q du placement partitionné Q' ont une forme géométrique différente de celle des pièces du placement P décrit précédemment. De part cette forme géométrique particulière, le résultat du partitionnement mis en œuvre par le procédé selon l'invention peut résulter en des chevauchements entre des pièces situées à la frontière entre deux groupes de pièces voisins. Ces chevauchements sont identifiés sur la figure 6A par les références Ch.

Dans cette situation, le logiciel de la station informatique permet d'identifier automatiquement ces zones de chevauchements entre les pièces et de les signaler visuellement à l'opérateur. Ce dernier pourra alors intervenir manuellement pour affecter les pièces concernées à un autre groupe de pièces que celui auquel l'algorithme avait établi de sorte à appliquer à ces pièces des déplacements permettant d'éviter tout chevauchement avec des pièces voisines.

Ainsi, comme représenté sur la figure 6B, l'opérateur va affecter les pièces q-i et q-j (préalablement affectées au groupe de pièces G-k) au groupe de pièces G-l voisin. De même, la pièce q-k préalablement affectée au groupe de pièces G-m va être affectée au groupe de pièces G-n, et la pièce q-l préalablement affectée au groupe de pièces G-m va être affectée au groupe de pièces G-l.

La réaffectation de ces pièces q-i à q-l à d'autres groupes de pièces va automatiquement entraîner leur déplacement et permettre ainsi de faire en disparaître tout chevauchement avec des pièces voisines.

## Revendications

1. Procédé de partitionnement d'un placement prédéterminé (P) de pièces (p-1 à p-n) destinées à être découpées dans un matériau souple en feuille par déplacement d'au moins un outil de coupe suivant deux directions (X, Y) dans au moins deux fenêtres de coupe distinctes et déterminées le long desquelles le matériau est successivement avancé, dans lequel, à partir d'un placement prédéterminé des pièces dans le matériau, le procédé comprend :
la création automatique de groupes de pièces (G-1 à G-m) distincts les uns des autres en affectant chaque pièce à un unique groupe de pièces en fonction de son placement géométrique, chaque groupe de pièces étant associé, pour la découpe, à un même outil de coupe (O-1 à O-k) et à une même fenêtre de coupe (F-1 à F-l) ;
**caractérisé en ce que** le procédé comprend en outre l'application d'espacements (DX, DY) entre les différents groupes de pièces.

2. Procédé selon la revendication 1, dans lequel l'étape de création automatique de groupes de pièces comprend, pour chaque pièce (p-i) du placement, l'affectation de la pièce à l'un des outils de coupe (O-j) en fonction d'une position transversale de ladite pièce prise le long d'une direction transversale (Y) du matériau par rapport à sa direction d'avance (X) ; et
si l'outil de coupe auquel est affectée la pièce a été préalablement associé à un groupe de pièces prédéfini (G-h), la comparaison d'une longueur (L) prise dans le sens de la direction d'avance du matériau d'un rectangle englobant l'ensemble des pièces du groupe et auquel est rajouté ladite pièce avec une longueur (L') d'une fenêtre de coupe (F-i) ;
si la longueur du rectangle est inférieure à la longueur de la fenêtre de coupe, l'affectation de la pièce au groupe de pièces (G-h) prédéfini ;
si la longueur du rectangle est supérieure ou égale à la longueur de la fenêtre de coupe ou si l'outil de coupe auquel est affectée la pièce n'a été préalablement associé à aucun groupe de pièces prédéfini, la création d'un nouveau groupe de pièces (G-h+1) associé à l'outil de coupe et à une nouvelle fenêtre de coupe (F-i+1) et l'affectation de la pièce au nouveau groupe de pièces.

3. Procédé selon la revendication 2, dans lequel l'affectation des pièces à l'un des outils de coupe comprend :
le partitionnement du placement des pièces dans le sens d'une largeur du partitionnement en fonction du nombre d'outils de coupe distincts utilisés pour découper les pièces, le partitionnement du placement résultant en des zones de placement adjacentes ayant une même largeur et associées chacune à un unique outil de coupe ; et
l'affectation de chaque pièce du placement à l'une des zones de placement en fonction de la position transversale de la pièce.

4. Procédé selon la revendication 3, dans lequel, préalablement à l'affectation de chaque pièce du placement à l'une des zones de placement, les pièces sont triées par ordre croissant en fonction d'une position longitudinale (Xmin) desdites pièces prise le long de la direction d'avance du matériau.

5. Procédé selon l'une quelconque des revendications 2 à 4, dans lequel la position transversale (Yc) d'une pièce correspond à une position du centre géométrique d'un rectangle (B-i) de plus petites dimensions englobant la pièce.

6. Procédé selon l'une quelconque des revendications 1 à 5, dans lequel l'étape d'application d'espacements entre les différents groupes de pièces comprend l'application à chaque pièce d'un même groupe de pièces d'un même décalage longitudinal (DX) selon la direction d'avance du matériau et d'un même décalage transversal (DY) selon la direction transversale à la direction d'avance du matériau.

7. Procédé selon la revendication 6, dans lequel le décalage longitudinal appliqué à chaque pièce d'un même groupe dépend de la fenêtre de coupe et de l'outil de coupe auxquels est associé le groupe de pièces.

8. Procédé selon l'une quelconque des revendications 1 à 7, comprenant en outre, après l'étape l'application d'espacements entre les différents groupes de pièces, l'identification automatique d'éventuelles zones de chevauchement (Ch) entre des pièces de différentes groupes de pièces et la correction de ces zones de chevauchement.

9. Procédé selon l'une quelconque des revendications 1 à 8, dans lequel le placement prédéterminé des pièces dans le matériau correspond à un placement optimisé calculé automatiquement pour minimiser les pertes de matière.

10. Utilisation du procédé selon l'une quelconque des revendications 1 à 9 pour le partitionnement d'un placement prédéterminé de pièces de renforts pour coussins gonflables de sécurité destinées à être découpées dans un matériau.

11. Programme d'ordinateur comportant des instructions pour l'exécution des étapes du procédé de partitionnement d'un placement prédéterminé de pièces selon l'une quelconque des revendications 1 à 9.

12. Support d'enregistrement lisible par un ordinateur sur lequel est enregistré un programme d'ordinateur comprenant des instructions pour l'exécution des étapes du procédé de partitionnement d'un placement prédéterminé de pièces selon l'une quelconque des revendications 1 à 9.

## Patentansprüche

1. Verfahren zur Aufteilung einer vorbestimmten Platzierung (P) von Teilen (p-1 bis p-n), die dazu bestimmt sind, in einem bogenförmigen flexiblen Material durch Verlagerung von mindestens einem Schneidwerkzeug entlang von zwei Richtungen (X, Y) in mindestens zwei verschiedenen und bestimmten Schneidfenstern ausgeschnitten zu werden, entlang denen das Material nach und nach vorgeschoben wird, wobei das Verfahren ausgehend von einer vorbestimmten Platzierung der Teile in dem Material umfasst:
die automatische Erzeugung von Gruppen von Teilen (G-1 bis G-m), die sich voneinander unterscheiden, durch Zuweisen jedes Teils zu einer einzigen Gruppe von Teilen in Abhängigkeit von seiner geometrischen Platzierung, wobei jede Gruppe von Teilen für das Ausschneiden einem selben Schneidwerkzeug (O-1 bis O-k) und einem selben Schneidfenster (F-1 bis F-l) zugehörig ist,
**dadurch gekennzeichnet, dass** das Verfahren ferner die Anwendung von Zwischenräumen (DX, DY) zwischen den verschiedenen Gruppen von Teilen umfasst.

2. Verfahren nach Anspruch 1, wobei der Schritt der automatischen Erzeugung von Gruppen von Teilen für jedes Teil (p-i) der Platzierung die Zuweisung des Teils zu einem von den Schneidwerkzeugen (O-j) in Abhängigkeit von einer Querposition des Teils, die entlang einer Querrichtung (Y) des Materials in Bezug auf seine Vorschubrichtung (X) genommen wird, umfasst, und
wenn das Schneidwerkzeug, dem das Teil zugewiesen wird, vorhergehend einer vordefinierten Gruppe von Teilen (G-h) zugehörig war, den Vergleich einer Länge (L), die im Sinne der Vorschubrichtung des Materials genommen wird, eines Rechtecks, das die Gesamtheit der Teile der Gruppe enthält und zu dem das Teil hinzugefügt wird, mit einer Länge (L') eines Schneidfensters (F-i),
wenn die Länge des Rechtecks kleiner als die Länge des Schneidfensters ist, die Zuweisung des Teils zu der vordefinierten Gruppe von Teilen (G-h),
wenn die Länge des Rechtecks größer als oder gleich die Länge des Schneidfensters ist oder wenn das Schneidwerkzeug, dem das Teil zugewiesen ist, vorhergehend keiner vordefinierten Gruppe von Teilen zugehörig war, die Erzeugung einer neuen Gruppe von Teilen (G-h+1), die dem Schneidwerkzeug und einem neuen Schneidfenster (F-i+1) zugehörig ist, und die Zuweisung des Teils zu der neuen Gruppe von Teilen.

3. Verfahren nach Anspruch 2, wobei die Zuweisung der Teile zu einem von den Schneidwerkzeugen umfasst:
die Aufteilung der Platzierung der Teile im Sinne einer Breite der Aufteilung in Abhängigkeit von der Anzahl von verschiedenen Schneidwerkzeugen, die zum Ausschneiden der Teile verwendet werden, wobei die Aufteilung der Platzierung benachbarte Platzierungszonen ergibt, die eine gleiche Breite aufweisen und jeweils einem einzigen Schneidwerkzeug zugehörig sind, und
die Zuweisung von jedem Teil der Platzierung zu einer von den Platzierungszonen in Abhängigkeit von der Querposition des Teils.

4. Verfahren nach Anspruch 3, wobei vor der Zuweisung von jedem Teil der Platzierung zu einer von den Platzierungszonen, die Teile in aufsteigender Reihenfolge in Abhängigkeit von einer Längsposition (Xmin) der Teile sortiert werden, die entlang der Vorschubrichtung des Materials genommen wird.

5. Verfahren nach einem der Ansprüche 2 bis 4, wobei die Querposition (YC) eines Teils einer Position der geometrischen Mitte eines Rechtecks (B-i) mit kleineren Abmessungen, welches das Teil enthält, entspricht.

6. Verfahren nach einem der Ansprüche 1 bis 5, wobei der Schritt der Anwendung von Zwischenräumen zwischen den verschiedenen Gruppen von Teilen die Anwendung eines gleichen Längsversatzes (DX) entlang der Vorschubrichtung des Materials und eines gleichen Querversatzes (DY) entlang der Richtung quer zur Vorschubrichtung des Materials auf jedes Teil einer selben Gruppe von Teilen umfasst.

7. Verfahren nach Anspruch 6, wobei der Längsversatz, der auf jedes Teil einer selben Gruppe angewandt wird, von dem Schneidfenster und dem Schneidwerkzeug abhängt, denen die Gruppe von Teilen zugehörig ist.

8. Verfahren nach einem der Ansprüche 1 bis 7, das ferner nach dem Schritt der Anwendung von Zwischenräumen zwischen den verschiedenen Gruppen von Teilen die automatische Identifizierung etwaiger Überschneidungszonen (Ch) zwischen Teilen verschiedener Gruppen von Teilen und die Korrektur dieser Überschneidungszonen umfasst.

9. Verfahren nach einem der Ansprüche 1 bis 8, wobei die vorbestimmte Platzierung der Teile in dem Material einer optimierten Platzierung entspricht, die automatisch berechnet wird, um Materialverluste zu minimieren.

10. Verwendung des Verfahrens nach einem der Ansprüche 1 bis 9 zur Aufteilung einer vorbestimmten Platzierung von Verstärkungsteilen für Airbags, die dazu bestimmt sind, in einem Material ausgeschnitten zu werden.

11. Computerprogramm, das Anweisungen zur Ausführung der Schritte des Verfahrens zur Aufteilung einer vorbestimmten Platzierung von Teilen nach einem der Ansprüche 1 bis 9 umfasst.

12. Aufzeichnungsmedium, das von einem Computer lesbar ist und auf welchem ein Computerprogramm aufgezeichnet ist, das Anweisungen zur Ausführung der Schritte des Verfahrens zur Aufteilung einer vorbestimmten Platzierung von Teilen nach einem der Ansprüche 1 bis 9 umfasst.

## Claims

1. A method of partitioning a predetermined layout (P) of parts (p-1 to p-n) that are to be cut out from a sheet of flexible material by moving at least one cutter tool along two directions (X, Y) in at least two distinct and determined cutting windows along which the material is advanced in succession, wherein, starting from a predetermined layout of the parts in the material, the method comprises:
automatically creating mutually distinct groups of parts (G-1 to G-m) by allocating each part to a single group of parts as a function of its geometrical position, each group of parts being associated, for cutting out, with a single cutter tool (0-1 to O-k) and with a single cutting window (F-1 to F-ℓ) ;
**characterised in that** the method further comprises applying spacings (DX, DY) between the various groups of parts.

2. A method according to claim 1, wherein the step of automatically creating groups of parts comprises, for each part (p-i) of the layout, allocating the part to one of the cutter tools (O-j) as a function of the transverse position of said part measured along a transverse direction (Y) of the material relative to its direction of advance (X); and
if the cutter tool to which the part is allocated has previously been associated with a predefined group of parts (G-h), measuring, in the direction of advance of the material, the length (L) of a rectangle that surrounds all of the parts of the group to which said part has been added, and comparing that length with the length (L') of a cutting window (F-i);
if the length of the rectangle is less than the length of the cutting window, allocating the part to the predefined group of parts (G-h); and
if the length of the rectangle is greater than or equal to the length of the cutting window, or if the cutter tool to which the part is allocated has not previously been associated with any predefined group of parts, creating a new group of parts (G-h+1) associated with the cutter tool and with a new cutting window (F-i+1) and allocating the part to the new group of parts.

3. A method according to claim 2, wherein allocating parts to one of the cutter tools comprises:
• partitioning the layout of parts in the width direction of the partitioning as a function of the number of distinct cutter tools used for cutting out the parts, the partitioning of the layout resulting in adjacent layout zones having the same width and each associated with a respective one of the cutter tools; and
• allocating each part of the layout to one of the layout zones as a function of the transverse position of the part.

4. A method according to claim 3, wherein prior to allocating each part of the layout to one of the layout zones, the parts are sorted in increasing order as a function of the longitudinal positions (Xmin) of said parts measured along the direction of advance of the material.

5. A method according to any one of claims 2 to 4, wherein the transverse position (Yc) of a part corresponds to the position of the geometrical center of a smallest-size rectangle (B-i) that surrounds the part.

6. A method according to any one of claims 1 to 5, wherein the step of applying spacings between the various groups of parts comprises applying to all of the parts of a given group of parts a common longitudinal shift (DX) along the direction of advance of the material and a common transverse shift (DY) along the direction transverse to the direction of advance of the material.

7. A method according to claim 6, wherein the longitudinal offset applied to each part of a given group of parts depends on the cutting window and on the cutter tool with which the group of parts is associated.

8. A method according to any one of claims 1 to 7, further comprising, after the step of applying spacings between the various groups of parts, automatically identifying any overlap zones (Ch) between parts of different groups of parts, and correcting those overlap zones.

9. A method according to any one of claims 1 to 8, wherein the predetermined layout of the parts in the material corresponds to an optimized layout that is calculated automatically in order to minimize losses of material.

10. The use of the method according to any one of claims 1 to 9 for partitioning a predetermined layout of reinforcing parts for airbags, which parts are to be cut out from a material.

11. A computer program including instructions for executing steps of the method of partitioning a predetermined layout of parts according to any one of claims 1 to 9.

12. A computer readable data medium storing a computer program including instructions for executing steps of the method of partitioning a predetermined layout of parts according to any one of claims 1 to 9.
